(19) Europäisches Patentamt
European Patent Office
Office européen des brevets

(11) **EP 1 992 398 A1**

(12) **EUROPEAN PATENT APPLICATION**

(43) Date of publication:
**19.11.2008 Bulletin 2008/47**

(51) Int Cl.:
**B01D 53/94** (2006.01)   **F01N 3/20** (2006.01)

(21) Application number: **07108151.7**

(22) Date of filing: **14.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nederlandse Organisatie voor toegepast-natuurwetenschappelijk onderzoek TNO 2628 VK Delft (NL)**

(72) Inventors:
• **Van der Eijnden, Edwin Adrianus Cornelius 5611 VW Eindhoven (NL)**
• **Cloudt, Robert Peter Maria 2611 GE Delft (NL)**

(74) Representative: **van Loon, C.J.J. Vereenigde Johan de Wittlaan 7 2517 JR Den Haag (NL)**

(54) **Calibration method and apparatus for SCR catalyst systems**

(57)   The invention is directed to a procedure for fitting relevant parameters in SCR catalyst models and to an apparatus for carrying out such procedures.

Following the procedure of the present invention, it is possible to make a first estimate of the SCR model parameters by fitting the parameters individually. This is possible because of special measurements that simplify and isolate reactions in the SCR model. The set of parameters determined via this method are used as a starting point for a global optimization of the model parameters. The measurements made are the determination of the NOx conversion by the SCR catalyst using ammonia, and the determination of the NOx conversion by the SCR catalyst using urea.

The apparatus comprises an engine (3), an engine brake (2), a SCR catalyst (10), an ammonia injection point (8), a urea injection point (9), a pre-SCR measurement point (7), a post-SCR measurement point (11) and an ambient measurement point (12).

Fig. 1

EP 1 992 398 A1

**Description**

The invention is directed to a procedure for fitting relevant parameters in SCR catalyst models and to an apparatus for carrying out such procedures.

The calculation of the right values for parameters in chemical models to fit them to the process variables ("model fitting") involves the comparison of experimental data with a model, such that the relevant parameters in the model can be assigned values, which minimize the difference between theoretical (model) predictions and measured real-life response, for a given set of input variables. Finding the right values of the model's parameters determines to a large extent the model's reliability. Model fitting can be a tedious task and may result in errors because of the large amount of factors involved. By result, the outcome of the fitting process is often unpredictable and results may give a false sense of security.

At the same time, having a reliable model is of great importance for a number of reasons. For instance, a good model for SCR catalyst systems can be used for simulation purposes, thus reducing the requirement for expensive real-life tests. Also a reliable model can be used in the design process of catalyst systems. Furthermore a reliable model is required in process control when the catalyst system is installed.

For SCR catalyst systems there is a long felt need for reliable models, because the use of SCR catalyst is already widespread and still increasing. Most models that are applied today may still give incorrect results, which make such models unreliable.

In one aspect, the present invention is directed to an improved procedure for fitting the parameters in an SCR model to experimental data, which experimental data is obtained in a modified engine testbench, which produces engine off-gases that are obtained under real-life (i.e. automotive) conditions or nearly real-life conditions.

By way of example, a typical SCR model comprises the following equations.

**Reaction equations:**

$$r_{pyr}: \quad H_4N_2CO \rightarrow NH_3 + HNCO \quad\quad (1)$$

$$r_{hyd}: \quad HNCO + H_2O \rightarrow NH_3 + CO_2 \quad\quad (2)$$

$$r_{st}: \quad 4NH_3 + 4NO + O_2 \rightarrow 4N_2 + 6H_2O \quad\quad (3)$$

$$r_{sn}: \quad 2NH_3 + NO + NO_2 \rightarrow 2N_2 + 3H_2O \quad\quad (4)$$

$$r_{la}: \quad 8NH_3 + 6NO_2 \rightarrow 7N_2 + 12H_2O \quad\quad (5)$$

$$r_{oxn2}: \quad 4NH_3 + 3O_2 \rightarrow 2N_2 + 6H_2O \quad\quad (6)$$

$$r_{oxno}: \quad 4NH_3 + 5O_2 \rightarrow 4NO + 6H_2O \quad\quad (7)$$

$$r_{\leftrightarrow}: \quad 2NO + O_2 \leftrightarrow 2NO_2 \quad\quad (8)$$

Non-catalytic urea decomposition:

$$\rho_{rg} = \frac{M_{rg} \cdot P}{R \cdot T_{rg}} \qquad (9)$$

$$v_{pijp} = \frac{\Phi_{rg}}{\rho_{rg} \cdot \frac{\pi}{4} \cdot D_{pijp}^2} \qquad (10)$$

$$C_{H_4N_2CO}^1 = C_{H_4N_2CO}^0 \cdot \exp\left(\frac{-k_{H_4N_2CO} \cdot L_{pijp}}{v_{pijp}}\right) \qquad (11)$$

$$k_{H_4N_2CO} = k_{H_4N_2CO}^0 \cdot \exp\left(\frac{-E_{H_4N_2CO}}{R} \cdot \left(\frac{1}{T_g} - \frac{1}{T_{ref}}\right)\right) \qquad (12)$$

$$C_{HNCO}^1 = C_{H_4N_2CO}^0 - C_{H_4N_2CO}^1 \qquad (13)$$

$$C_{NH_3}^1 = C_{HNCO}^1 \qquad (14)$$

Reactions in SCR-catalyst:
Mass balance SCR catalyst surface:

$$\frac{\partial \theta_{NH_3}}{\partial t} = r_a - r_d - r_{st} - 2r_{sn} - \frac{4}{3}r_{la} - r_{oxn2} - r_{oxno} \qquad (15)$$

Mass balance gasfase:

$$v_{kat} = \frac{\Phi_{rg}}{\rho_{rg} \cdot \frac{\pi}{4} \cdot D_{kat}^2 \cdot \varepsilon_{kat}} \qquad (16)$$

$$\frac{\partial C_{H_4N_2CO}}{\partial t} = -v_{kat}\frac{\partial C_{H_4N_2CO}}{\partial x} - r_{H_4N_2CO} \qquad (17)$$

$$\frac{\partial C_{HNCO}}{\partial t} = -v_{kat}\frac{\partial C_{HNCO}}{\partial x} + r_{H_4N_2CO} - r_{HNCO} \qquad (18)$$

$$\frac{\partial C_{NH_3}}{\partial t} = -v_{kat}\frac{\partial C_{NH_3}}{\partial x} + r_{H_4N_2CO} + r_{HNCO} - \Omega \cdot (r_a - r_d) \qquad (19)$$

$$\frac{\partial C_{NO}}{\partial t} = -v_{kat}\frac{\partial C_{NO}}{\partial x} - \Omega \cdot (r_{st} + r_{sn} - r_{oxno} + r_{\rightarrow} - r_{\leftarrow}) \qquad (20)$$

$$\frac{\partial C_{NO2}}{\partial t} = -v_{kat}\frac{\partial C_{NO2}}{\partial x} - \Omega \cdot (r_{sn} + r_{la} - r_{\rightarrow} + r_{\leftarrow}) \qquad (21)$$

Reaction rates equations:

$$r_{H_4N_2CO} = k_{H_4N_2CO}^{kat} \cdot \exp\left(\frac{-E_{H_4N_2CO}^{kat}}{R} \cdot \left(\frac{1}{T_s} - \frac{1}{T_{ref}}\right)\right) \cdot C_{H_4N_2CO} \qquad (22)$$

$$r_{HNCO} = k_{HNCO}^0 \cdot \exp\left(\frac{-E_{HNCO}^0}{R} \cdot \left(\frac{1}{T_s} - \frac{1}{T_{ref}}\right)\right) \cdot C_{HNCO} \qquad (23)$$

$$r_a = k_a^0 \cdot C_{NH_3} \cdot \left(1 - \theta_{NH_3}\right) \qquad (24)$$

$$r_d = k_d^0 \cdot \exp\left(\frac{-E_d^0 \cdot \left(1 - \alpha \cdot \theta_{NH_3}\right)}{R} \cdot \left(\frac{1}{T_s} - \frac{1}{T_{ref}}\right)\right) \cdot \theta_{NH_3} \qquad (25)$$

$$r_{st} = k_{st}^0 \cdot \exp\left(\frac{-E_{st}}{R} \cdot \left(\frac{1}{T_s} - \frac{1}{T_{ref}}\right)\right) \cdot C_{NO} \cdot \theta_{NH_3}^* \cdot \left(1 - \exp\left(\frac{-\theta_{NH_3}}{\theta_{NH_3}^*}\right)\right) \qquad (26)$$

$$r_{sn} = k_{sn}^0 \cdot \exp\left(\frac{-E_{sn}}{R} \cdot \left(\frac{1}{T_s} - \frac{1}{T_{ref}}\right)\right) \cdot C_{NO} \cdot C_{NO_2} \cdot \theta_{NH_3}^* \cdot \left(1 - \exp\left(\frac{-\theta_{NH_3}}{\theta_{NH_3}^*}\right)\right) \qquad (27)$$

$$r_{la} = k_{la}^0 \cdot \exp\left(\frac{-E_{la}}{R} \cdot \left(\frac{1}{T_s} - \frac{1}{T_{ref}}\right)\right) \cdot C_{NO_2} \cdot \theta_{NH_3}^* \cdot \left(1 - \exp\left(\frac{-\theta_{NH_3}}{\theta_{NH_3}^*}\right)\right) \qquad (28)$$

$$r_{oxn2} = k_{oxn2}^0 \cdot \exp\left(\frac{-E_{oxn2}}{R} \cdot \left(\frac{1}{T_s} - \frac{1}{T_{ref}}\right)\right) \cdot \theta_{NH_3} \qquad (29)$$

$$r_{oxno} = k_{oxno}^0 \cdot \exp\left(\frac{-E_{oxno}}{R} \cdot \left(\frac{1}{T_s} - \frac{1}{T_{ref}}\right)\right) \cdot \theta_{NH_3} \qquad (30)$$

$$r_{\rightarrow} = k_{\rightarrow}^0 \cdot \exp\left(\frac{-E_{\rightarrow}}{R} \cdot \left(\frac{1}{T_s} - \frac{1}{T_{ref}}\right)\right) \cdot C_{NO} \cdot \sqrt{C_{O_2}} \qquad (31)$$

$$r_{\leftarrow} = \frac{k_{\rightarrow}^0}{K_{\leftrightarrow}} \exp\left(\frac{-E_{\rightarrow}}{R} \cdot \left(\frac{1}{T_s} - \frac{1}{T_{ref}}\right)\right) \cdot C_{NO_2} \qquad (32)$$

Equilibrium constants:

$$K_{\leftrightarrow} = \sqrt{\frac{R \cdot T_S}{P}} \cdot \exp\left(\frac{-\Delta G_{\leftrightarrow}}{R \cdot T_S}\right) \qquad (33)$$

$$\Delta G_{\leftrightarrow} = G_{NO_2}^\circ - G_{NO}^\circ - \tfrac{1}{2} G_{O_2}^\circ \qquad (34)$$

$$G_i^\circ = H_i^\circ - T_s \cdot S_i^\circ \qquad (35)$$

$$H_i^\circ = 10^3 \cdot \left( A_i \cdot \left(\frac{T_s}{10^3}\right) + \frac{B_i}{2} \cdot \left(\frac{T_s}{10^3}\right)^2 + \frac{C_i}{3} \cdot \left(\frac{T_s}{10^3}\right)^3 + \frac{D_i}{4} \cdot \left(\frac{T_s}{10^3}\right)^4 - E_i \cdot \left(\frac{10^3}{T_s}\right) + F_i \right)$$
$$(36)$$

$$S_i^\circ = A_i \cdot \ln\left(\frac{T_s}{10^3}\right) + B_i \cdot \left(\frac{T_s}{10^3}\right) + \frac{C_i}{2} \cdot \left(\frac{T_s}{10^3}\right)^2 + \frac{D_i}{3} \cdot \left(\frac{T_s}{10^3}\right)^3 - \frac{E_i}{2} \cdot \left(\frac{10^3}{T_s}\right)^2 + G_i \quad (37)$$

The notation used in these equations is explained in Tables 1a-1c.

**Table 1a**

| Parameter | Description | Unit |
|---|---|---|
| $k_a^0$ | Pre exponential factor adsorption | $m^3 \cdot mol^{-1} \cdot s^{-1}$ |

(continued)

| Parameter | Description | Unit |
|---|---|---|
| $E^0_a$ | Activation energy adsorption | $J \cdot mol^{-1}$ |
| $k^0_d$ | Pre exponential factor desorption | $s^{-1}$ |
| $E^0_d$ | Activation energy desorption | $Jmol^{-1}$ |
| $\alpha$ | Alfa | - |
| $\Omega$ | Storage capacity | $mol \cdot m^{-3}$ |
| $\theta^*_{NH3}$ | Critical surface coverage | - |
| $k^{cat}_{H4N2CO}$ | Pre exponential factor pyrolysis | $s^{-1}$ |
| $E^{cat}_{H4N2CO}$ | Activation energy pyrolysis | $J \cdot mol^{-1}$ |
| $k^0_{HNCO}$ | Pre exponential factor hydrolysis | $s^{-1}$ |
| $E_{HNCO}$ | Activation energy hydrolysis | $J \cdot mol^{-1}$ |
| $k^0_{st}$ | Pre exponential factor NO reaction | $m^3 \cdot mol^{-1} \cdot S^{-1}$ |
| $E_{st}$ | Activation energy NO reaction | $J \cdot mol^{-1}$ |
| $k^0_{sn}$ | Pre exponential factor $NO+NO_2$ reaction | $m^6 \cdot mol^{-2} \cdot S^{-1}$ |
| $E_{sn}$ | Activation energy $NO+NO_2$ reaction | $J \cdot mol^{-1}$ |
| $k^0_{la}$ | Pre exponential factor $NO_2$ reaction | $m^3 \cdot mol^{-1} \cdot s^{-1}$ |
| $E_{la}$ | Activation energy $NO_2$ reaction | $J \cdot mol^{-1}$ |
| $k^0_{oxno}$ | Pre exponential factor oxidation reaction | $s^{-1}$ |
| $E_{oxno}$ | Activation energy oxidation reaction | $J \cdot mol^{-1}$ |
| $L_{pijp}$ | length between urea injection point and SCR catalyst | m |
| $D_{pijp}$ | diameter pipe between urea injection point and SCR catalyst | m |
| $T_{ref}$ | reference temperature | K |
| R | gas constant | J/mol*K |

**Table 1b**

| Rates | Description | Unit |
|---|---|---|
| $r_{pyr}$ | reaction rate pyrolysis | |
| $r_{hyd}$ | reaction rate hydrolysis | |
| $r_{st}$ | *reaction rate NO* | |
| $r_{sn}$ | *reaction rate $NO+NO_2$* | |
| $r_{la}$ | *reaction rate $NO_2$* | |
| $r_{oxn2}$ | *reaction rate oxidation $NH_3$ to $N_2$* | |
| $r_{oxno}$ | *reaction rate oxidation $NH_3$ to NO* | |
| $r_{<->}$ | reaction rate NO <-> $NO_2$ | |

**Table 1c**

| Signal | Description | |
|---|---|---|
| C | concentration | $mol/m^3$ |

(continued)

| Signal | Description | |
|---|---|---|
| $\theta_{NH3}$ | $NH_3$ storage | - |
| $T_g$ | temperature gas | K |
| This | temperature SCR brick | K |
| $v_{kat}$ | Gas speed in SCR brick | m/s |
| P | gas pressure | $N/m^2$ |
| $A_i, B_i, C_i, D_i, E_i, F_i$ | polynomial constants | |
| $H^o_i$ | Species enthalpy | J |
| G | Species Gibbs energy | J |
| $S_i$ | Species entropy | J/K |

The procedure of the present invention is developed based on measurements that can be carried out on a specifically designed engine test-bench and will be illustrated by means of the above-mentioned SCR model.

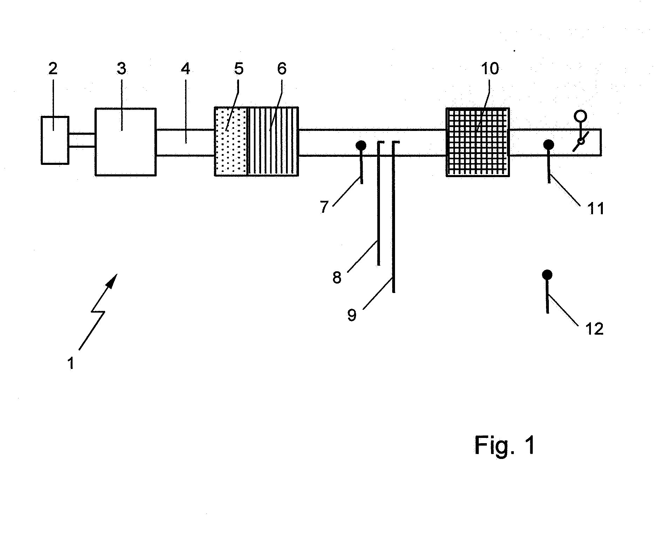

The test-bench of the present invention is schematically depicted in Figure 1. The test set-up (1) comprises an engine (3), connected to an engine brake (2). The engine may be any commercially available or newly developed model, which provides for realistic process conditions. By combining the engine (3) with adjustable brake (2), specific working points (WP) can be chosen, i.e. a combination of a specific torque (Nm) at a certain engine speed (RPM). The engine off-gases are fed trough outlet (4) into a bed of oxidation catalyst (5), which is optional. Subsequently the gases are fed trough soot filter (6), which is also optional. At a measurement point labeled "pre-SCR" (7) various process conditions can be measured, such as concentrations of the relevant gases (NO, $NO_2$, $NH_3$, *etc.*), temperature, total pressure and the like. One of the specific features of the apparatus of the present invention is that it uses a combination of $NH_3$ injection (8) and urea injection (9). This allows for measurements from which data can be derived that can be used to gain knowledge of the urea decomposition mechanism. Urea is used in real life deNOx facilities as a source of $NH_3$. $NH_3$ itself is generally too dangerous to handle in realistic deNOx applications, whereas urea is much more easy to handle. Because $NH_3$ plays an important role in the reaction mechanisms that are at the basis of the model, the option to switch between urea and $NH_3$ in accordance with the present invention results in very reliable results.

After the gases are contacted with urea and/or $NH_3$, they are fed to SCR catalyst (10), where the actual deNOx reaction takes place.

After the gases leave the catalyst they are analyzed again at a measurement point labeled "post-SCR" (11). Also ambient conditions are monitored (temperature, pressure) at measurement point labeled "ambient measurement" (12).

The set-up of the present invention provides much more realistic results than fitting the equation on a flow bench with idealized circumstances (e.g. synthetic, simulated off-gases).

Following the procedure of the present invention, it is possible to make a first estimate of the SCR model parameters by fitting the parameters individually. This is possible because of special measurements that simplify and isolate reactions in the SCR model. The set of parameters determined via this method are used as a starting point for a global optimization of the model parameters. It was found that this is a far better approach than directly fitting all parameters with a global optimization. When starting with a random model parameter-set, the risk is big that the global optimization gives an unrealistic parameter-set.

Hereinbelow, first the test set-up that is required to perform the tests and the signals that should be measured during the tests are described. Then the tests to characterize the catalyst are described. Next the procedure to find the SCR catalyst parameters is detailed.

**Test setup and measured signals**

A catalyst model can be fitted and validated by performing specific measurements on the SCR catalyst. In the prior art, these measurements are often performed with a flow reactor. According to the present invention the test method is carried out on an engine testbench (and possibly even on a chassis dynometer). The engine is a real life engine or similar thereto in its operation variables (in particular temperature development and off-gas composition).

The engine is connected to an engine brake. This can be a steady state or a transient brake. In accordance with the present invention, the exhaust line minimally contains a SCR catalyst and can contain a preoxidation catalyst and soot filter. Catalysts behind the SCR catalysts can be installed to set a back pressure.

SCR catalyst usually contain two catalyst modules, usually in the form of a well-known monolith ("honeycomb structure") with parallel channels (herein referred to as "bricks"). In accordance with the present invention, one brick should be used for characterization. This gives more information on the conversion potential of the SCR catalyst.

Before the SCR catalyst a $NH_3$ and urea solution (usually AdBlue™) injection point should be installed. It is important that the $NH_3$ and urea (e.g. AdBlue) is homogeneously distributed in radial direction before it enters the SCR catalyst, which can be secured using common distributor means. For the urea injection it is important that the urea has enough residence time for the thermolysis process.

In one embodiment of the present invention the following signals are measured during the characterization of the SCR catalyst (see Table 2). An "X" means the corresponding signal is measured at the indicated point.

**Table 2: Measured signals on test set-up**

| Measured | Measurement point pre SCR | Measurement point post SCR | Measurement point ambient |
|---|---|---|---|
| Pressure gas | X | X | X |
| Temperature gas | X | X | X |
| Exhaust mass-flow | X | | |
| CO | X | X | |
| Hydrocarbon | X | X | |
| $CO_2$ | X | X | |
| $O_2$ | X | X | |
| NOx | X | X | |
| NO | X | X | |
| $N_2O$ | X | X | |
| $NH_3$ | | X | |

## Test program SCR catalyst characterization

To characterize the SCR catalyst system certain tests should be performed with the test set-up. Tests can be performed with $NH_3$ injection and with urea (e.g. AdBlue) injection. Also if an oxidation catalyst is used pre SCR, the system can be tested with and without SCR catalyst. The measurements that can be performed are summarized in Table 3.

**Table 3: Test program**

| Injection | SCR | Oxidation catalyst | Test |
|---|---|---|---|
| $NH_3$ | - | X | validation of test set-up |
| urea (*e.g.* AdBlue) | - | X | validation of test set-up, thermolysis |
| $NH_3$ | X | X | initial characterisation, characterisation sequence |
| $NH_3$ | X | | initial characterisation, characterisation sequence |
| Urea (*e.g.* AdBlue) | X | X | characterisation sequence, driving cycle |

## Validation of test set-up and thermolysis measurements

The first step is to do measurements with the test set-up without the SCR catalyst. This means that the exhaustline is used as shown in Figure 1, but without the SCR catalyst. With this set-up the equipment can be validated by performing specific tests. Also the thermolysis before the SCR catalyst can be characterized by performing measurements without SCR catalyst.

This part of the test-procedure typically comprises the following steps:

- Test communication
- Determine low temperature engine working point (for example 200 °C) with a maximum Space Velocity
- Determine reference engine working point (for example 300°C) with a maximum Space Velocity

- Determine regeneration working point

With the following measurements the test set-up can be validated:

- Compare analyzers before and after the SCR catalyst
- Inject $NH_3$ and check if it corresponds with value on $NH_3$ analyzer
- Low temperature point
- Reference point
- Regeneration point
- Check cross sensitivity analyzers for $NH_3$ by switching $NH_3$ injection on/off in reference point
- Check if $NH_3$ analyzer is working properly when making a transient from low temperature working point to the regeneration point
- Determine time delay between analyzers while making a transient from the reference point to the regeneration point

After that the thermolysis measurements are also performed without the SCR catalyst:

- Measure thermolysis in exhaustline at low temperature, reference and regeneration point with stochiometric urea injection.

After these measurements the SCR catalyst can be installed.
With the SCR catalyst installed the following initial measurements are used to validate the system:

Steady state

- Inject $NH_3$ (NSR=1; NSR is the normal stoichiometric ratio. This term is used to describe the $NH_3$/NOx molar ratio of the reagent injected to uncontrolled NOx concentrations. If one mole of anhydrous ammonia is injected for each mole of NOx in the flue gas, the NSR is one, as one mole of ammonia will react with one mole of NOx. If one mole of urea is injected into the flue gas for each mole of NOx, the NSR is two. This is because one mole of urea will react with two moles of NOx. For both reagents, the higher the NSR, the greater the level of NOx reduction. Increasing NSR beyond a certain point, however, will have a diminishing effect on NOx reduction, with reagent utilization decreasing beyond this point) in reference point and check mass balance
- Inject urea (e.g. AdBlue) (NSR=1) in reference point and check mass balance

Transient

- Switch $NH_3$ injection on (NSR=1) and off in reference point
- Switch urea (e.g. AdBlue) injection on (NSR=1) and off in reference point

**Initial characterization SCR catalyst**

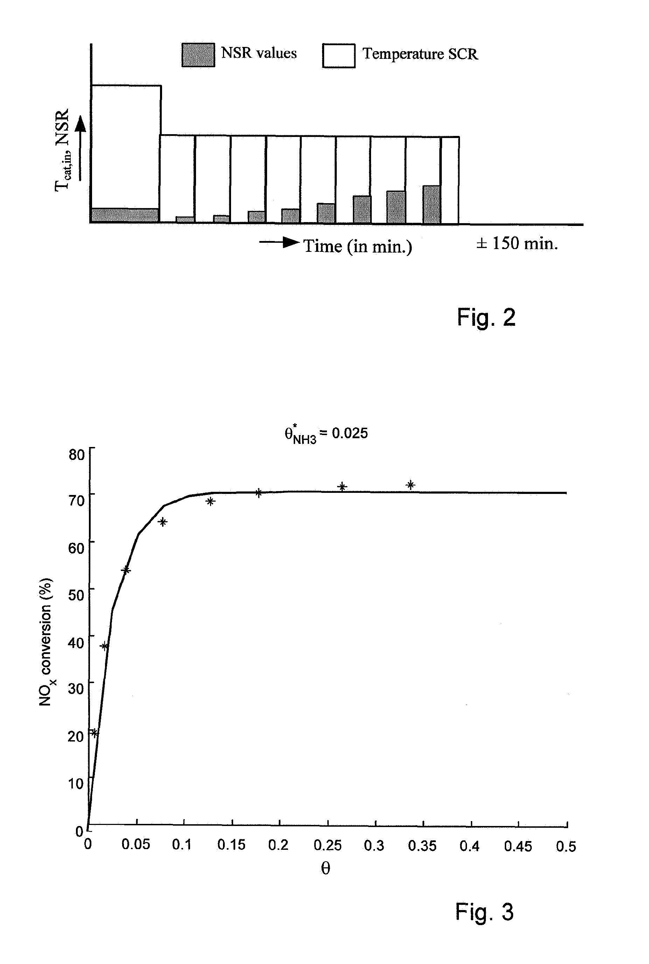

With this part of the procedure an initial estimate of the model parameters can be determined. This is realized with a specific measurement program, that simplifies the model and isolates specific reactions.
For the initial parameter estimate procedure the assumption was made that the NOx conversion will remain constant when the NSR is increased above a certain value. This must be verified by running a test in which the NSR is increased in steps while the SCR catalyst temperature and Space Velocity remain constant (see Figure 2).
The test should be realized in the low temperature point and reference point.
The test procedure for determining the relation between $NH_3$ storage and NOx conversion is shown schematically in Figure 2. The test begins with a high temperature working point to regenerate a soot filter if present, but also to remove absorbed emissions as hydrocarbons in the SCR catalyst. After this a constant working point is run. During this steady state operation of the engine the $NH_3$ injection is switched on and off. For determining the intervals it is important that the intervals are long enough for reaching steady state conditions. The $NH_3$ injection starts with high values and is reduced with small steps to finally reach no injection. This test is performed in the low temperature point and the reference point.
If the NOx conversion saturates at the high NSR values, the fit can be performed using the measurements from Figure 2.

$$r_{NO} = k_{NO} \exp\left(-\frac{E_{NO}}{RT}\right) \cdot \left(1 - \exp\left(\frac{-\theta_{NH_3}}{\theta_{NH_3}^*}\right)\right) \quad \text{(Equation 1)}$$

An example of the fit with $\theta_{NH_3}^*$ is given in Figure 3, which shows a fit of $\theta^*_{NH3}$ based on NH$_3$ storage measurements.

If the NOx conversion is not saturating, the NSR values where the NOx conversion starts to decrease should not be used for the fit. The NSR values used in the experiments described in this document should be limited accordingly.

To characterize the catalyst, the catalyst performance should be measured at different temperatures and space velocities (SV). These different temperatures and SVs are realized by running the engine on the testbench in different working points. In accordance with the present invention a minimum number of working points is required, from which a maximum amount of information can be obtained. Preferably at least thirteen working points are used. Minimizing the number of working points results in considerably less experimentation time and consequently may save costs. When choosing the working points the following considerations are important:

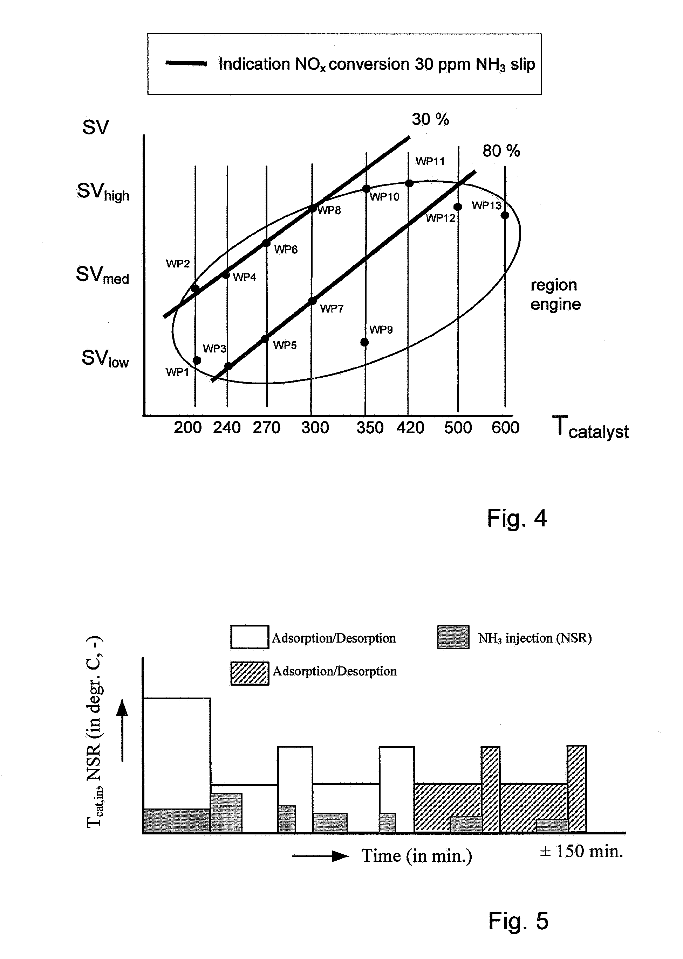

The working points should be chosen such that a desired SCR catalyst temperature and SV are obtained. At the light-off temperature of the SCR catalyst extra working points should be chosen in temperature and SV direction. Figure 4 schematically depicts engine working points based on SV and $T_{catalyst}$. The working points should be tuned for a specific SCR catalyst. This should be done based on the NO$_x$ conversion potential in a working point. The NO$_x$ conversion potential is measured by injecting a NH$_3$ quantity resulting in $\pm 30$ ppm NH$_3$ slip. In accordance with the present invention the working points should have about the following NO$_x$ conversion (see Table 4).

Table 4: Indication NO$_x$ conversion for each working point

| WP | indication NO$_x$ conversion (in %) |
|----|-------------------------------------|
| 1 | 30 |
| 2 | 0 |
| 3 | 80 |
| 4 | 30 |
| 5 | 80 |
| 6 | 30 |
| 7 | 80 |
| 8 | 30 |
| 9 | <90 |
| 10 | 50 |
| 11 | 70 |
| 12 | <90 |
| 13 | <90 |

Preferably certain working points should have the same SCR temperature and a variation in the Space Velocity: WP1 and 2, WP3 and 4, WP 5 and 6, WP7 and 8, WP9 and 10. By changing the Space Velocity, the NO$_2$/NO ratio oxidation catalyst out changes (when an oxidation catalyst is used and placed before the SCR catalyst). Preferably the high Space Velocity working points (WP2, 4, 6, 10) should have a NO$_2$/NO ratio below 1 and the low Space Velocity working points (WP1, 3, 5, 7) should have a NO$_2$/NO ratio higher than 1.

If NOx conversion is not equal to desired value in a certain working point, the engine speed and/or torque should be changed to get the right NOx conversion.

The working points determined above are used for the tests in the remainder of the present application. An initial estimate of the NH$_3$ adsorption/desorption parameters is made using the test shown schematically in Figure 5, which shows a test sequence that can be used to get first estimate of storage and adsorption/desorption parameters. The test starts with a regeneration. After that the engine switches between two working points. A high and a low temperature working point. During the working point NH$_3$ injection is switched on and off. The dosing of the NH$_3$ injection is set too a high value, in order to simplify model parameterization.

The interval of the working points and NH$_3$ injection should be chosen long enough to realize steady state conditions. The first part of the test is to fit the relative difference between adsorption/desorption parameters. With the second test and the result from the first test, the individual adsorption/desorption parameters can be fitted.

The following sequences can be run:

In the first sequence the following working points are used:

WP13 (NSR=2); WP2 (NSR=6); WP9 (NSR=3.5); WP2 (NSR=2); WP9 (NSR=2); WP2 (NSR=1.5); WP9); WP2 (NSR=1.2); and WP9

In the second sequence the following working points are used:

WP13 (NSR=2); WP4 (NSR=6); WP7 (NSR=3.5); WP4 (NSR=2); WP7 (NSR=2); WP4 (NSR=1.5); WP7); WP4 (NSR=1.2); and WP7.

When using the high NSR values as used in the tests, the assumption can be made that $r_a=r_d$ and therefore that the NH$_3$ that is used to convert NOx is negligible. The equation that should be solved is therefore (see Equation 2).

$$r_a = r_d \quad \Rightarrow \quad \theta_{NH_3} = f\left( \frac{k_a^0}{k_d^0}, E_a - E_d \right) \quad \text{(Equation 2)}$$

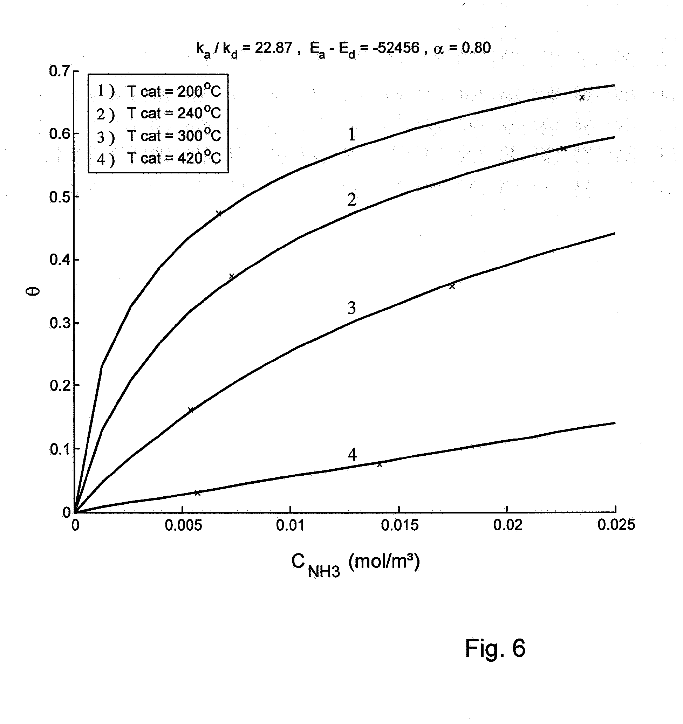

An example of the fit of the parameters $\left( \frac{k_a^0}{k_d^0}, E_a - E_d \right)$ in shown in Figure 6. The measured points (the crosses in Figure 6) are a result from the first part of the test shown in Figure 5.

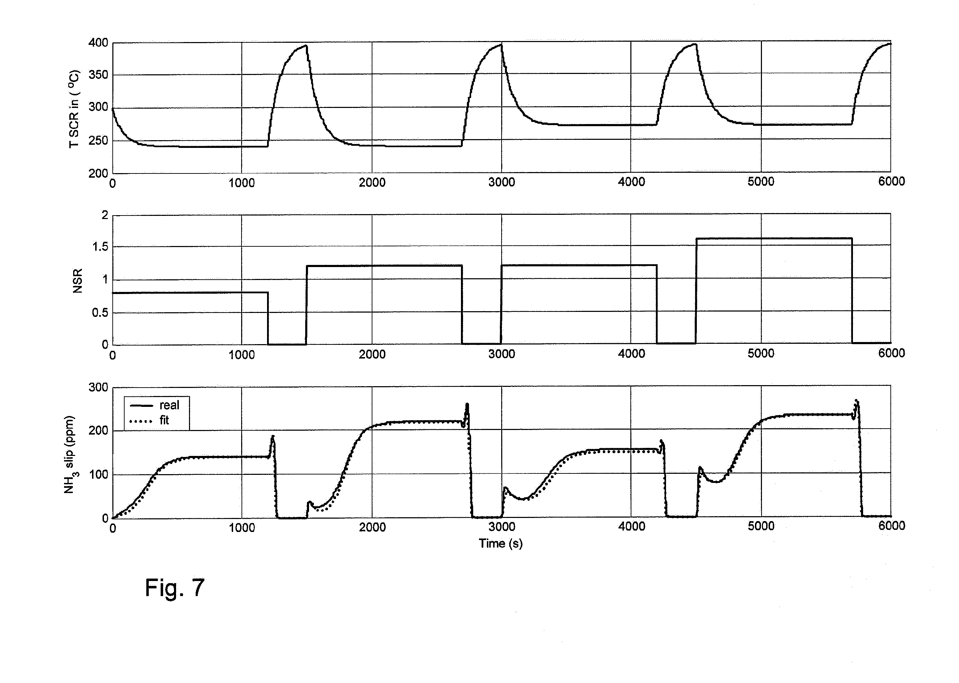

With the second part of the measurements in Figure 5 and the parameters $k_a/k_d$, $E_a$-$E_d$, the individual parameters can be determined. An example of this fit is shown in Figure 7.

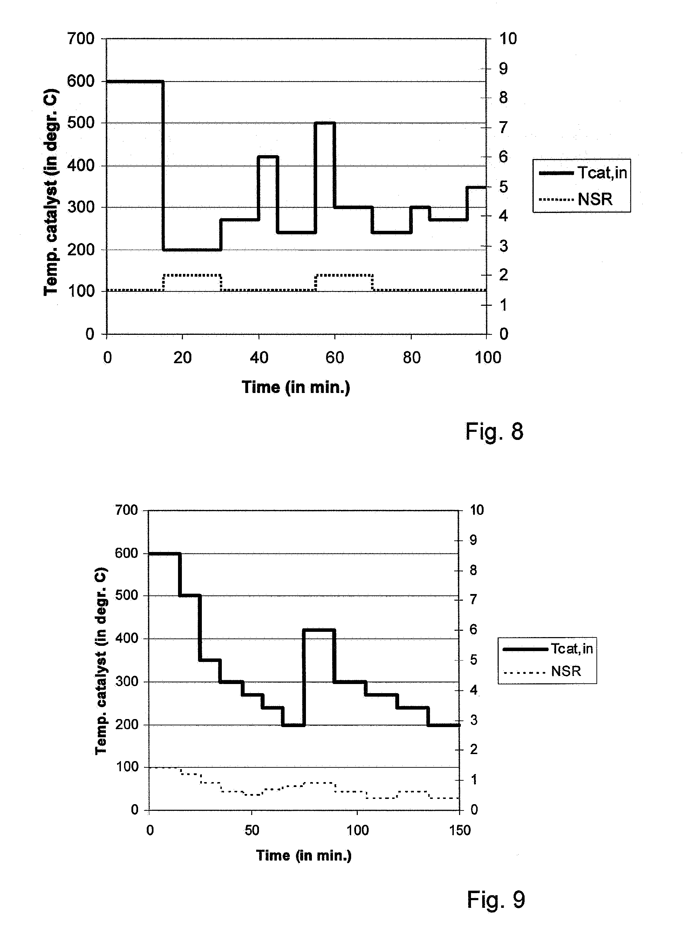

The NOx conversion parameters are fitted with a different test sequence. The test sequence comprises a series of working points. The characterization test sequence for SCR catalyst with high NSR is shown schematically in Figure 8. The sequence of the working points is: WP13 (NSR=1.5); WP1 (NSR=2);WP5 (NSR=1.5); WP11 (NSR=1.5); WP3 (NSR=1.5); WP12 (NSR=2); WP7 (NSR=2); WP4 (NSR=1.5); WP8 (NSR=1.5); WP6); and WP10 (NSR=1.5).

During the operation in a working point, NH$_3$ is injected with a high NSR value. The high dosing should guarantee a homogeneous NOx conversion distribution through the length of the SCR catalyst. This simplifies the fitting of the NOx conversion parameters The duration of each working point should be chosen long enough to reach steady state conditions. Especially at low temperatures this can take significant time.

With the test a first estimate of the NOx conversion parameters can be made ($k_{NO2}$, $E_{NO2}$, $k_{NO}$, $E_{NO}$, $k_{la}$, $E_{la}$).

In order to fit the six parameters in the three NOx reaction equations (see below) enough variation in the NO/NO$_2$ ratio at the inlet of the SCR catalyst is required.

$$2NH3 + NO + NO2 \rightarrow 2N2 + 3H_2O \quad (T > 200\ °C)$$
$$4NH3 + 4NO + O2 \rightarrow 4N2 + 6H_2O \quad (T > 300\ °C, NO:NO2 > 1)$$
$$8NH3 + 6NO2 \rightarrow 7N2 + 12H_2O \quad (T > 400°C, NO:NO2 < 1, SV < 100\ 000\ h^{-1})$$

**Optimization fit SCR catalyst**

With the previous measurements an initial fit of the model parameters can be made. This is realized by isolating and fitting individual parameters. The fit of the model can be improved by optimizing the parameterset for more realistic NH$_3$ injection quantities. For this the following test sequence is used (see Figure 9, showing the test sequence for SCR catalyst with realistic NSR). This test sequence was also used for finding the initial NOx conversion parameters. During this test however more realistic NSR values are used. The NSR values used should result in a NH$_3$ slip of about 30 ppm in each working point. Finally, the decomposition reaction parameters in the SCR catalyst can be fitted. This can be realized by repeating the test sequence as in Figure 9, but now with AdBlue injection. The decomposition reaction parameters can be fitted indirectly by comparing the NOx conversion and $NH_3$ slip over the test between $NH_3$ and AdBlue injection.

The parameter fitting process of the present invention provides for the possibility of limiting the amount of time and costs involved for SCR catalyst model developing. The method of the invention can be conveniently automated and presented in the form of a software tool.

**Claims**

1. Apparatus for carrying out an SCR catalyst system calibration method comprising an engine (3), operable connected to an adjustable engine brake (2), which engine is connected to outlet (4) for off-gas, which outlet (4) is optionally connected to an oxidation catalyst (5), which is optionally connected to a soot filter (6), further comprising a pre-SCR measurement point (7), a $NH_3$ injection point (8) and a urea injection point (9), an SCR catalyst (10), a measurement point labeled "post-SCR" (11) and a measurement point labeled "ambient measurement" (12).

2. Process for fitting parameters in a SCR catalyst model, comprising the steps of operating the apparatus of claim 1, comprising operating said engine (3), whereby an NOx-comprising offgas is produced, and carrying out at least two different measurements on said offgas, the first measurement being determining the NOx-conversion by said SCR catalyst (10) using $NH_3$ from said $NH_3$ injection point (8) and the second measurement being determining the NOx-conversion by said SCR catalyst (10) using urea from said urea injection point (9) and using said measurement in said fitting of parameters.

3. Process according to claim 2, comprising the steps of:

   - determining at least two working points;
   - determining the relation between $NH_3$ storage and NOx conversion carrying out saturation measurements;
   - running tests using high $NH_3$ injection;
   - running tests with normal $NH_3$ injection; and
   - running tests with normal urea injection.

Fig. 1

Fig. 2

Fig. 3

Fig. 4

Fig. 5

Fig. 6

Fig. 7

Fig. 8

Fig. 9

**European Patent Office**

**EUROPEAN SEARCH REPORT**

Application Number

EP 07 10 8151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 105 365 A (DEEBA ET AL) 22 August 2000 (2000-08-22) | 1 | INV. B01D53/94 F01N3/20 |
| A | * column 10, line 15 - column 10, line 64 * | 2,3 | |
| A | US 6 742 330 B2 (GENDEREN) 1 June 2004 (2004-06-01) * column 6, line 40 - column 6, line 44 * * column 15, line 29 - column 18, line 22 * | 1-3 | |
| A | EP 1 367 248 A (CATERPILLAR INC.) 3 December 2003 (2003-12-03) * column 3, paragraph 9 - column 6, paragraph 31 * | 1-3 | |
| A | US 6 343 468 B1 (DOELLING ET AL) 5 February 2002 (2002-02-05) * column 6, line 25 - column 8, line 10 * | 1-3 | |

TECHNICAL FIELDS SEARCHED (IPC)

B01D
F01N

The present search report has been drawn up for all claims

| Place of search | Date of completion of the search | Examiner |
|---|---|---|
| The Hague | 23 October 2007 | Doolan, Gerard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 8151

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2007

| Patent document cited in search report | | Publication date | Patent family member(s) | | Publication date |
|---|---|---|---|---|---|
| US 6105365 | A | 22-08-2000 | AU | 6766298 A | 30-10-1998 |
| | | | DE | 19882303 T0 | 23-03-2000 |
| | | | WO | 9845582 A1 | 15-10-1998 |
| | | | ZA | 9802716 A | 30-09-1998 |
| US 6742330 | B2 | 01-06-2004 | AT | 303506 T | 15-09-2005 |
| | | | AU | 9683701 A | 29-04-2002 |
| | | | DE | 60113147 D1 | 06-10-2005 |
| | | | DE | 60113147 T2 | 14-06-2006 |
| | | | EP | 1339955 A2 | 03-09-2003 |
| | | | JP | 2004518053 T | 17-06-2004 |
| | | | WO | 0233232 A2 | 25-04-2002 |
| | | | US | 2002148220 A1 | 17-10-2002 |
| | | | US | 2002152745 A1 | 24-10-2002 |
| | | | US | 2002194841 A1 | 26-12-2002 |
| | | | US | 6415602 B1 | 09-07-2002 |
| EP 1367248 | A | 03-12-2003 | JP | 2003328732 A | 19-11-2003 |
| | | | US | 2003216855 A1 | 20-11-2003 |
| US 6343468 | B1 | 05-02-2002 | AT | 216027 T | 15-04-2002 |
| | | | CN | 1244231 A | 09-02-2000 |
| | | | WO | 9835143 A1 | 13-08-1998 |
| | | | DE | 19704558 A1 | 13-08-1998 |
| | | | DK | 961871 T3 | 05-08-2002 |
| | | | EP | 0961871 A1 | 08-12-1999 |
| | | | ES | 2175675 T3 | 16-11-2002 |
| | | | JP | 3342497 B2 | 11-11-2002 |
| | | | JP | 2000517022 T | 19-12-2000 |

EPO FORM P0459

For more details about this annex : see Official Journal of the European Patent Office, No. 12/82